# EUROPÄISCHE PATENTSCHRIFT

(11) **EP 1 712 121 B1**
(45) Veröffentlichungstag und Bekanntmachung des Hinweises auf die Patenterteilung: **21.05.2008**
(21) Anmeldenummer: 06112369.1
(22) Anmeldetag: 07.04.2006
(51) Int. Cl.: A01D 61/00, A01D 75/18

(54) **Mitnehmereinheit eines Rotationsförderers**
Pick-up device for a rotating conveyor
Entraîneur pour convoyeur rotatif

(30) Priorität: 13.04.2005 DE 102005016976
(43) Veröffentlichungstag der Anmeldung: 18.10.2006
(73) Patentinhaber: Deere & Company, Moline, IL 61265-8098 (US)
(72) Erfinder: Lanzinger, Bernhard, 85465, Langenpreising (DE)
(74) Vertreter: Holst, Sönke

(56) Entgegenhaltungen:
- EP-A- 1 040 749
- DE-A1- 3 840 168

## Beschreibung

Die Erfindung betrifft eine Mitnehmereinheit eines Rotationsförderers, mit einer auf einem Achsabschnitt drehbar anordenbaren Fingerhalterung, einem an der Fingerhalterung durch Haltemittel befestigten Finger und für den Fall eines Bruchs des Fingers zum Festhalten des von der Fingerhalterung beabstandeten Teils des Fingers an der Fingerhalterung vorgesehenen Rückhaltemitteln.

### Stand der Technik

Mit Fingern besetzte Rotationsförderer finden an Erntemaschinen Verwendung, um Erntegut einzuziehen oder zu fördern. Bei Überlastung oder Materialermüdung können die Finger abbrechen, wobei der sich lösende Teil des Fingers Schäden an Bauteilen der Erntemaschine verursachen kann. Es wurden daher in der Vergangenheit Maßnahmen vorgeschlagen, die Teile der Finger, mit deren Abbrechen zu rechnen ist, am Förderer festzuhalten.

In der DE 38 40 168 A wird eine Mitnehmereinheit eines Rotationsförderers beschrieben, bei der eine Fingerhalterung an einer exzentrisch zu einem rotierenden Rohr angeordneten Welle gelagert ist. Der Finger ist durch eine Schraubverbindung mit der Fingerhalterung verbunden und weist etwa auf halber Länge eine Sollbruchstelle in Form einer Nut und zweier beidseits der Nut angeordnete Wulste auf. Ein winkelförmiger Halter weist einen äußeren Schenkel mit einer auf den äußeren Abschnitt des Fingers aufgeschobene Öffnung auf, deren Durchmesser kleiner als der Durchmesser des Wulstes ist. Der innere Schenkel des Fingers umfasst ebenfalls eine Öffnung, die von der zum Befestigen des Fingers an der Fingerhalterung dienenden Schraube durchdrungen wird. Es wird hier demnach ein zusätzliches Element, nämlich der winkelförmige Halter benötigt.

In der EP 10 40 749 A wird eine Mitnehmereinheit beschrieben, deren Fingerhalterung aus zwei durch ein Schwenkgelenk miteinander verbundenen Hälften besteht. Der Finger wird endseitig zwischen den Hälften eingespannt. Die Hälften und der Finger werden durch eine aufgeschobene Hülse aneinander fixiert und die Hülse wird durch einen Löcher in den Hälften und im Finger durchdringenden Splint gesichert. Hier ist keine Sicherung des äußeren Teils des Fingers gegen Ablösen vorgesehen.

### Aufgabe der Erfindung

Die der Erfindung zu Grunde liegende Aufgabe wird darin gesehen, eine einfach und preiswert herstellbare Mitnehmereinheit eines Rotationsförderers bereitzustellen, bei der der äußere Teil des Fingers gegen Ablösen gesichert ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Mitnehmereinheit eines Rotationsförderers umfasst einen Finger, der durch Haltemittel mit einer Fingerhalterung verbunden ist. Es wird vorgeschlagen, die im Falle eines Bruchs des Fingers zum Festhalten des äußeren, von der Fingerhalterung beabstandeten Teils des Fingers dienenden Rückhaltemittel mit den Haltemitteln einteilig zu gestalten. Auf diese Weise wird die Anzahl der herzustellenden und zu bevorratenden Teile der Mitnehmereinheit reduziert.

In einer bevorzugten Ausführungsform sind die Haltemittel durch einen Splint realisiert. Ein erstes Ende des Splints durchdringt eine Öffnung, die sich durch die Fingerhalterung und den Finger erstreckt, um den Finger an der Fingerhalterung zu befestigen. Der Splint umrundet oder umschließt weiterhin, insbesondere durch sein zweites Ende, den von der Fingerhalterung beabstandeten, gegen Ablösen zu sichernden Teil des Fingers zumindest teilweise.

Es bietet sich an, den Finger an einer geeigneten Stelle zwischen seinem an der Fingerhalterung befestigten Teil und seinem mit den Rückhaltemitteln zusammenwirkenden Teil mit einer Sollbruchstelle auszustatten, um sicherzustellen, dass der Finger im Falle einer Überlastung oder Materialermüdung an der Sollbruchstelle bricht und die Rückhaltemittel dann auch tatsächlich wirksam werden.

Außerdem ist es sinnvoll, den Finger zwischen seinem an der Fingerhalterung befestigten Teil und seinem mit den Rückhaltemitteln zusammenwirkenden Teil mit einem gegenüber dem übrigen Finger verdickten, d. h. gegenüber dem übrigen Finger nach außen überstehenden Bereich zu versehen, der sicherstellt, dass die Rückhaltemittel den abgebrochenen Teil des Fingers festhalten.

In einer bevorzugten Ausführungsform ist die Fingerhalterung in Form eines schließbaren Lagerelements geformt und umfasst zwei Fingerhalterungsabschnitte, zwischen denen der Finger aufgenommen wird. Die Lagerelemente werden im Bereich des Fingerhalterungsabschnitts durch eine Hülse umschlossen und somit aneinander befestigt. Die Haltemittel fixieren wiederum die Hülse am Fingerhalterungsabschnitt. Bei den Haltemitteln kann es sich um den oben erwähnten Splint handeln, der Öffnungen in der Hülse, im Fingerhalterungsabschnitt und vorzugsweise, jedoch nicht notwendigerweise, im Finger durchdringt. Bei einer anderen Ausführungsform werden die Haltemittel durch die Hülse selbst realisiert (s. zweite Ausführungsform der EP 10 40 749 A), die dann auch einteilig mit einem als Rückhaltemittel dienenden Abschnitt ausgeformt sein kann.

### Ausführungsbeispiel

In den Zeichnungen sind zwei nachfolgend näher beschriebene Ausführungsbeispiele der Erfindung dargestellt. Es zeigt:
- Fig. 1: eine schematische Seitenansicht eines Schneidwerks und des Vorderteils eines Schrägförderergehäuses eines Mähdreschers, wobei das Schneidwerk einen Schneckenförderer enthält, in dem die Erfindung verwirklicht ist;
- Fig. 2: eine teilweise geschnittene Vorderansicht, in der der Mittelteil des Schneckenförderers und die Anordnung der Finger wiedergegeben ist;
- Fig. 3: eine perspektivische Ansicht einer ersten Ausführungsform einer Mitnehmereinheit; und
- Fig. 4: eine perspektivische Ansicht einer zweiten Ausführungsform einer Mitnehmereinheit.

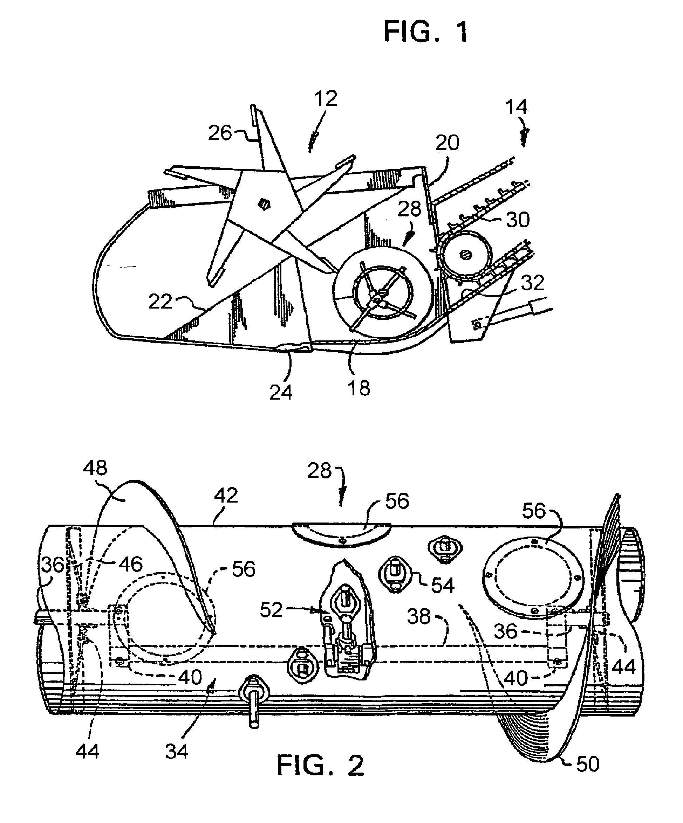

Die Erfindung wird im Schneckenförderer des ansonsten konventionellen, für die Getreideernte dienenden Schneidwerks 12 eines Mähdreschers verwendet, welches in der Figur 1 in Seitenansicht dargestellt ist. Das Schneidwerk 12 ist am Schrägförderergehäuse 14 des Mähdreschers befestigt. Das Schneidwerk 12 besteht in seinem grundsätzlichen Aufbau aus einer vorn geöffneten Struktur, die einen Boden 18, eine Rückwand 20 und gegenüberliegende Seitenteile 22 aufweist. Ein Mähwerksbalken 24 erstreckt sich an der Vorderseite des Bodens 18 nach vorn, und dient zum Abschneiden stehenden Ernteguts. Eine Haspel 26 dreht sich oberhalb des Mähwerksbalkens 24 und über dem vorderen Teil des Bodens 18, und wirkt mit einem Schneckenförderer 28 des Schneidwerks 12 zusammen.

Das Schneidwerk 12 ist wesentlich breiter als das Schrägförderergehäuse 14 und der Schneckenförderer 28 führt das geerntete Gut vom Mähwerksbalken 24 zusammen und transportiert es seitlich zur Mitte des Schneidwerks 12. Dort wird das Erntegut dem Schrägförderergehäuse 14 übergeben, wo es vom Schrägförderer 30 des Schrägförderergehäuses 14 erfasst und über den Boden des Schrägförderergehäuses 14 nach hinten und oben gefördert wird, um es der (nicht gezeigten) Dreschtrommel des Mähdreschers zuzuführen.

Wie in Figur 2 dargestellt ist, wird der Schneckenförderer 28 drehbar von einer Achsanordnung 34 getragen, die gegenüberliegende koaxiale Achsabschnitte 36 und einen versetzten, exzentrischen Achsabschnitt 38 aufweist, der durch ein Paar von Armen 40 fest mit den Achsabschnitten 36 verbunden ist. Die an den gegenüberliegenden Enden des Schneckenförderers 28 angeordneten Achsabschnitte 36 sind an den Seitenteilen 22 des Schneidwerks 12 drehfest befestigt, wie es im Stand der Technik bekannt, aber nicht in den Zeichnungen dargestellt ist.

Der Schneckenförderer 28 umfasst ein längliches, zylindrisches Rohr 42, das konzentrisch mit den Achsabschnitten 36 durch Lagerzusammenbauten 44 drehbar an den Achsabschnitten 36 gelagert ist, wobei die Lagerzusammenbauten 44 fest an der Innenseite des Rohrs 42 angebrachte Tragelemente 46 tragen, die insbesondere sternförmig sein können. Links bzw. rechts angeordnete wendelförmige Förderabschnitte 48, 50 des Schneckenförderers 28 wirken mit dem Boden 18 und der Rückwand 20 des Schneidwerks 12 zusammen, wenn der Schneckenförderer 28 sich dreht, um Erntegut zur Mitte des Schneckenförderers 28 zu fördern. Dort ist eine Vielzahl von Mitnehmereinheiten 52 am exzentrischen Achsabschnitt 38 befestigt. Jeder Finger 60 einer Mitnehmereinheit 52 erstreckt sich durch einen einer Vielzahl von Führungszusammenbauten 54, die in der Wand des Rohrs 42 befestigt sind. Entfernbare Deckel 56 ermöglichen einen Zugang ins Innere des Rohrs 42, um beispielsweise die Mitnehmereinheiten 52 zu warten. Geeignete, konventionelle Antriebseinrichtungen, die nicht in der Zeichnung wiedergegeben sind, sind bereitgestellt, um den Schneckenförderer 28 um die Achsabschnitte 36 zu drehen.

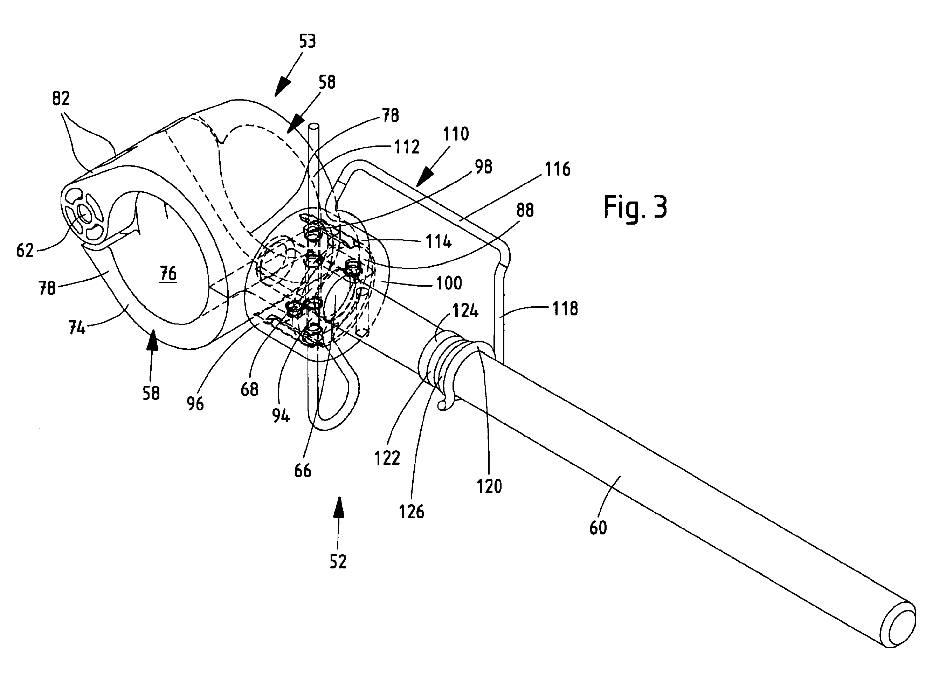

In der Figur 3 ist eine erste Ausführungsform einer Mitnehmereinheit 52 dargestellt. Die Mitnehmereinheit 52 umfasst eine Fingerhalterung 53, die sich aus einem Paar Lagerhälften 58 zusammensetzt, die einen langgestreckten Finger 60 haltern. Die zwei Lagerhälften 58 sind durch einen Scharnierstift 62 aneinander befestigt. Der Finger 60 hat einen ersten (proximalen) Endabschnitt 66 mit einer quer dadurch verlaufenden Bohrung 68, deren Achse senkrecht zur Längsachse des Fingers 60 verläuft.

Jede Lagerhälfte 58 umfasst einen zentralen Bereich, der einen Lagerabschnitt 74 bildet, welcher eine innere halbkreisförmige Lageroberfläche 76 und gegenüberliegende parallele Enden 78 aufweist. An einer Seite des Lagerabschnitts 74 erstrecken sich Scharnieransätze 82 radial von der halbkreisförmigen Lageroberfläche 76 fort. Bohrungen in den Scharnieransätzen 82 sind zueinander koaxial und parallel zur Längsachse der Lageroberfläche 76. An der gegenüberliegenden Seite des Lagerabschnitts 74 ist ein sich radial zur halbkreisförmigen Lageroberfläche 76 erstreckender Fingerhalterungsabschnitt 88. Eine quer verlaufende Bohrung 94 erstreckt sich durch jeden Fingerhalterungsabschnitt 88. Jede Lagerhälfte 58 ist vorzugsweise aus einem harten, stoßfesten Material, welches auch ohne Schmierung eine lange Lebensdauer der Lagerung gewährleistet. Ein Polyamid, wie Zytel ST 801, wurde erfolgreich verwendet.

Der Versatz der Scharnieransätze 82 und die Anordnung der Bohrungen für den Scharnierstift 62 sind derart gestaltet, dass die Lageroberflächen 76 sich gegenüberliegen und einander zugewandt sind, wenn jeweils zwei Lagerhälften 58 zusammengesetzt werden, wobei die beiden Lagerhälften 58 zusammenpassen und der Scharnierstift 62 in die Bohrungen eingesetzt werden kann, so dass die Lagerhälften 58 durch das - aus Scharnierstift 62 und Bohrungen gebildete - Scharnier drehbar aneinander befestigt sind, und die zusammengefügten Lageroberflächen 76 eine näherungsweise zylindrische Öffnung definieren. Die Lagerhälften 58 sind vorzugsweise miteinander identisch. Es ist denkbar, andere Formen der Kopplung als den Scharnierstift 62 zu verwenden, welche die Lagerhälften 58 schwenkbar aneinander koppeln, z. B. die zwei Scharnierhälften als einzelne Komponente mit einem einteiligen Scharnier zu gießen.

Die schwenkbare Lagerung der zwei Lagerhälften 58 kann geöffnet, auf dem exzentrischen Achsabschnitt 38 positioniert und geschlossen werden. Der Fingerhalterungsabschnitt 88 jeder Lagerhälfte 58 ist um eine senkrecht zur Achse der Lageroberfläche 76 verlaufende Achse symmetrisch. Wenn die Lagerhälften 58 zusammengefügt werden, bilden die Fingerhalterungsabschnitte 88 einen zylindrischen Sockel, der den ersten (proximalen) Endabschnitt 66 des Fingers 60 aufnimmt. Die quer verlaufende Bohrung 68 im Finger 60 ist mit der quer verlaufenden Bohrung in den Fingerhalterungsabschnitten 88 ausgerichtet.

Eine entlang des Fingers 60 verschiebbare Hülse 96 ist auf die zusammenpassenden Fingerhalterungsabschnitte 88 der Lagerhälften 58 aufgeschoben. Die Hülse 96 hat ebenfalls eine quer verlaufende Bohrung 98, die mit den quer verlaufenden Bohrungen 94 im Fingerhalterungsabschnitt 88 und der quer verlaufenden Bohrung 68 im Finger 60 ausgerichtet ist. Die Hülse 96 haltert die zwei Lagerhälften 58 in einer zusammenpassenden Stellung auf dem exzentrischen Achsabschnitt 38. Die Hülse 96 hat eine Endwand 100 mit einer mittigen Öffnung, um die Hülse 96 auf dem Finger 60 verschieben zu können.

Ein Splint 110 ist durch die Bohrung 98 in der Hülse 96, die Bohrungen 94 in den Fingerhalterungsabschnitten 88 und die Bohrung 68 im Finger 60 eingesetzt. Der Splint 110 dient dazu, die Hülse 96 auf den Fingerhalterungsabschnitten 88 zu halten, um sicherzustellen, dass die Lagerhälften 58 auf dem exzentrischen Achsabschnitt 38 festgehalten werden. Ein zweiter Zweck des Splints 110 besteht darin, den Finger 60 an den Fingerhalterungsabschnitten 88 festzuhalten.

Der Splint 110 umfasst neben einem sich durch die Bohrungen 68, 94 und 98 erstreckenden Abschnitt 112 einen an der Außenseite der Hülse 96 anliegenden, gebogenen Abschnitt 114, der in einen geradlinigen, sich parallel zur Längsachse des Fingers 60 erstreckenden Abschnitt 116 übergeht. Letzterer geht wiederum bei etwa einem Drittel der Länge des Fingers 60 in einen sich radial zum Finger 60 erstreckenden Abschnitt 118 über, der schließlich in einen den Finger 60 Ω-förmig umschließenden Abschnitt 120 übergeht.

Der Finger 60 ist in der Nähe des Abschnitts 120 des Splints 110, zwischen dem Abschnitt 120 und seinem ersten (proximalen) Ende, mit einer Sollbruchstelle 122 in Form einer Nut und zwei beidseits der Sollbruchstelle 122 angeordneten, nach außen radial überstehenden, wulstförmigen Bereichen 124, 126 ausgestattet.

Falls der Finger 60 durch Materialermüdung oder Überlastung brechen sollte, wird der Bruch aller Wahrscheinlichkeit nach an der Sollbruchstelle 122 erfolgen. Der abbrechende, äußere (distale) Teil des Fingers 60 wird dann durch den Abschnitt 120 des Splints 110 und den Wulst 126 daran gehindert, aus seinem Führungszusammenbau 54 auszutreten, so dass eventuelle Beschädigungen der Erntemaschine vermieden werden.

Vorzugsweise ist der Splint 110 ein federnder Verriegelungsstift, der von Hand in die Bohrungen 68, 94 und 98 eingesetzt und mit dem Abschnitt 120 um den Finger 60 gelegt werden kann, und auch von Hand ohne Handwerkzeug wieder entfernt werden kann. Daher können die Finger 60 und/oder die Lagerhälften 58 von Hand ersetzt werden, ohne dass innerhalb des Rohrs 42 Handwerkzeuge gehandhabt werden müssen. Die einteilige Ausgestaltung des Splints 110, der zum Einen als Haltemittel zur Befestigung des Fingers 60 an der Fingerhalterung 53 und zum Anderen als Rückhaltemittel für den Fall eines Bruchs des Fingers 60 dient, vermindert die Anzahl der herzustellenden und zu bevorratenden Teile.

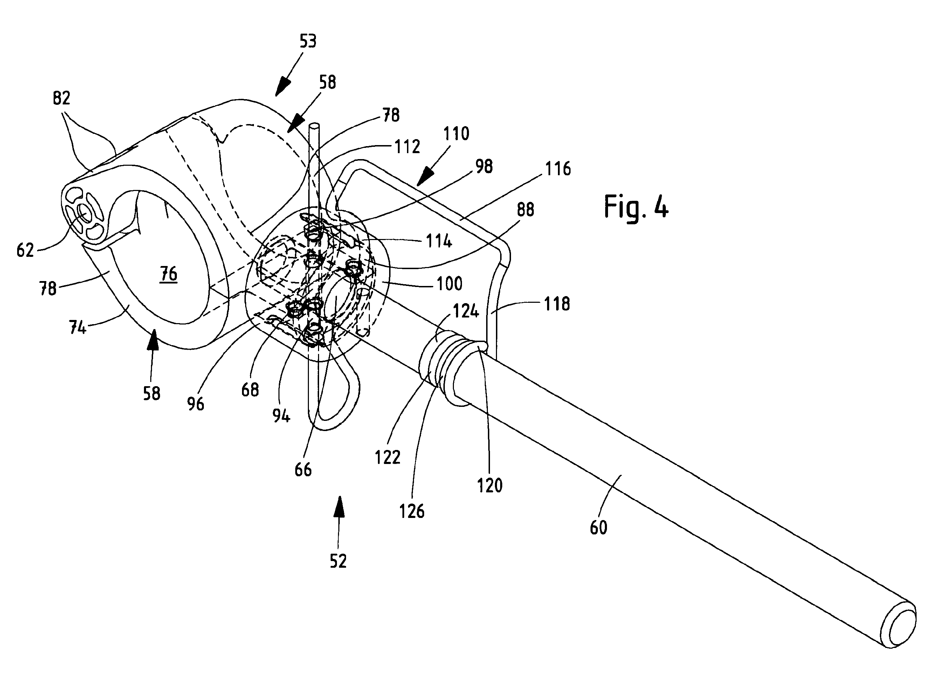

Bei der in der Figur 4 dargestellten Ausführungsform werden für mit der ersten Ausführungsform übereinstimmende Elemente jeweils dieselben Bezugszeichen verwendet. Der wesentliche Unterschied besteht darin, dass der Abschnitt 120 den Finger 60 kreisförmig umrundet.

## Patentansprüche

1. Mitnehmereinheit (52) eines Rotationsförderers (28), mit einer auf einem Achsabschnitt (38) drehbar anordenbaren Fingerhalterung (53), einem an der Fingerhalterung (53) durch Haltemittel befestigten Finger (60) und für den Fall eines Bruchs des Fingers (60) zum Festhalten des von der Fingerhalterung (53) beabstandeten Teils des Fingers (60) an der Fingerhalterung (53) vorgesehenen Rückhaltemitteln, **dadurch gekennzeichnet, dass** die Haltemittel und die Rückhaltemittel einteilig ausgebildet sind.

2. Mitnehmereinheit (52) nach Anspruch 1, **dadurch gekennzeichnet, dass** die Haltemittel in Form eines Splints (110) ausgestaltet sind, der sich durch eine den Finger (60) und die Fingerhalterung (53) durchdringende Öffnung (68, 94) erstreckt, und der als Rückhaltemittel einen den von der Fingerhalterung (53) beabstandeten Teil des Fingers (60) zumindest teilweise umschließenden Abschnitt (120) umfasst.

3. Mitnehmereinheit (52) nach einem der Ansprüche 1 oder 2, **dadurch gekennzeichnet, dass** der Finger (60) zwischen seinem der Fingerhalterung (53) benachbarten Teil und seinem mit den Rückhaltemitteln zusammenwirkenden Teil mit einer Sollbruchstelle (122) ausgestattet ist.

4. Mitnehmereinheit (52) nach einem der Ansprüche 1 bis 3, **dadurch gekennzeichnet, dass** der Finger (60) zwischen seinem der Fingerhalterung (53) benachbarten Teil und seinem mit den Rückhaltemitteln zusammenwirkenden Teil mit einem gegenüber dem übrigen Finger (60) nach außen überstehenden Bereich (126) ausgestattet ist.

5. Mitnehmereinheit (52) nach einem der Ansprüche 1 bis 4, **dadurch gekennzeichnet, dass** die Fingerhalterung (53) in Form eines schließbaren Lagerelements geformt ist und einen Fingerhalterungsabschnitt (88) aufweist, der zur Aufnahme des Fingers (60) eingerichtet ist, dass eine Hülse (96) vorgesehen ist, die eingerichtet ist, den Fingerhalterungsabschnitt (88) des Lagerelements zu umschließen und das Lagerelement zu schließen, und dass die Haltemittel die Hülse (96) am Fingerhalterungsabschnitt (88) befestigen.

6. Rotationsförderer (28) mit einem in Drehung versetzbaren Gehäuse (42), einem exzentrisch im Gehäuse (42) angeordneten Achsabschnitt (38) und einer Mitnehmereinheit (52) nach einem der vorhergehenden Ansprüche, deren Fingerhalterung (53) auf dem Achsabschnitt (38) angeordnet ist und deren Finger (60) sich zum Eingriff in zu förderndes Gut durch eine Öffnung im Gehäuse (42) erstreckt.

7. Erntemaschine oder Erntevorsatz mit einem Rotationsförderer (28) nach Anspruch 6.

## Claims

1. Pick-up device (52) of a rotating conveyor (28), with a finger holder (53) which can be arranged rotatably on an axle section (38), a finger (60) which is fastened to the finger holder (53) by means of holding means, and retaining means which are provided on the finger holder (53) in order to secure that part of the finger (60) which is spaced apart from the finger holder (53) in the event of breakage of the finger (60), **characterized in that** the holding means and the retaining means are designed as a single part.

2. Pick-up device (52) according to Claim 1, **characterized in that** the holding means are configured in the form of a cotter pin (110), which extends through an opening (68, 94), the opening penetrating the finger (60) and the finger holder (53), and which comprises, as the retaining means, a section (120) which at least partially surrounds that part of the finger (60) which is spaced apart from the finger holder (53).

3. Pick-up device (52) according to either of Claims 1 and 2, **characterized in that** the finger (60) is equipped with a predetermined breaking point (122) between its part which is adjacent to the finger holder (53) and its part which interacts with the retaining means.

4. Pick-up device (52) according to one of Claims 1 to 3, **characterized in that** the finger (60) is equipped with a region (126), which projects outwards in relation to the rest of the finger (60), between its part which is adjacent to the finger holder (53) and its part which interacts with the retaining means.

5. Pick-up device (52) according to one of Claims 1 to 4, **characterized in that** the finger holder (53) is formed in the shape of a closable bearing element and has a finger holder section (88) which is arranged so as to receive the finger (60), **in that** a sleeve (96) is provided which is arranged to surround the finger holder section (88) of the bearing element and to close the bearing element, and **in that** the holding means fasten the sleeve (96) to the finger holder section (88).

6. Rotating conveyor (28) with a housing (42) which can be moved in rotation, an axle section (38) which is arranged eccentrically in the housing (42) and a pick-up device (52) according to one of the preceding claims, the finger holder (53) of which is arranged on the axle section (38) and the finger (60) of which extends through an opening in the housing (42) for engagement in crop which is to be conveyed.

7. Harvesting machine or harvesting attachment with a rotating conveyor (28) according to Claim 6.

## Revendications

1. Unité d'entraînement (52) d'un convoyeur rotatif (28), comportant un support de doigt (53), apte à être monté de manière rotative sur un tronçon d'axe (38), un doigt (60) fixé sur le support de doigt (53) par l'intermédiaire de moyens de fixation, et des moyens de retenue prévus sur le support de doigt (53) pour retenir, en cas de rupture du doigt (60), la partie du doigt (60) située à distance du support de doigt (53), **caractérisée en ce que** les moyens de fixation et les moyens de retenue sont réalisés d'un seul tenant.

2. Unité d'entraînement (52) selon la revendication 1, **caractérisée en ce que** les moyens de fixation sont réalisés sous la forme d'une goupille fendue (110), qui passe à travers un orifice (68, 94) traversant le doigt (60) et le support de doigt (53), et le moyen de retenue comporte une partie (120) entourant au moins partiellement la partie du doigt (60), située à distance du support de doigt (53).

3. Unité d'entraînement (52) selon la revendication 1 ou 2, **caractérisée en ce que** le doigt (60) est muni d'une zone destinée à rupture (122) entre sa partie située à distance du support de doigt (53) et sa partie coopérant avec les moyens de retenue.

4. Unité d'entraînement (52) selon l'une quelconque des revendications 1 à 3, **caractérisée en ce que** le doigt (60), entre sa partie située à distance du support de doigt (53) et sa partie coopérant avec les moyens de retenue, est muni d'une zone (126) en saillie vers l'extérieur par rapport au reste du doigt (60).

5. Unité d'entraînement (52) selon l'une quelconque des revendications 1 à 4, **caractérisée en ce que** le support de doigt (53) est réalisé sous la forme d'un élément de palier apte à être fermé et comporte une partie de support (88), qui est conçue pour recevoir le doigt (60), **en ce qu'**il est prévu un manchon (96), qui est conçu pour entourer la partie de support (88) de l'élément de palier et pour fermer l'élément de palier, et **en ce que** les moyens de fixation fixent le manchon (96) sur la partie de support (88).

6. Convoyeur rotatif (28) comportant un carter (42) apte à être entraîné en rotation, un tronçon d'axe (38) disposé de manière excentrée dans le carter (42), et une unité d'entraînement (52) selon l'une des revendications précédentes, dont le support de doigt (53) est monté sur le tronçon d'axe (38) et dont le doigt (60) passe à travers un orifice dans le carter (42) en vue d'entrer en prise dans la masse végétale à transporter.

7. Machine de récolte ou outil de récolte frontal comportant un convoyeur rotatif (28) selon la revendication 6.
